# EUROPEAN PATENT SPECIFICATION

(11) **EP 3 567 688 B1**
(45) Date of publication and mention of the grant of the patent: **11.05.2022**
(21) Application number: 18171111.0
(22) Date of filing: 07.05.2018
(51) Int. Cl.: H02G 3/38, H02G 9/10, H02G 15/10, H02G 15/00, H02G 15/007, H02G 15/013

(54) **UNDERGROUND LINK BOX WITH REDUCED FAILURE PRONENESS**
UNTERIRDISCHER VERBINDUNGSKASTEN MIT REDUZIERTER AUSFALLANFÄLLIGKEIT
BOÎTE DE LIAISON SOUTERRAINE À SUSCEPTIBILITÉ DE DÉFAILLANCE RÉDUITE

(43) Date of publication of application: 13.11.2019
(73) Proprietor: Tyco Electronics UK Ltd, Wiltshire SN3 5HH (GB)
(72) Inventor: BARNETT, Gary, Ashby De La Zouch, Leicestershire LE65 1JH (GB); LEES, Robert, Braintree, Essex CM7 3HS (GB); EATON, David, Rushmere St Andrew, Suffolk IP5 1BG (GB)
(74) Representative: Grünecker Patent- und Rechtsanwälte PartG mbB

(56) References cited:
- EP-A1- 0 038 206
- EP-A2- 1 681 748
- WO-A1-03/081727
- JP-A- H09 219 917
- Tyco Electronics Raychem Gmbh: "Raichem Inline Joints", , 31 July 2003 (2003-07-31), XP055519017, Retrieved from the Internet: URL:https://www.engineeringsupplies.com.au /download/section3b.pdf [retrieved on 2018-10-25]
- . 6 Sicame Uk: "LINK BOXES", , 30 June 2017 (2017-06-30), XP055518031, Retrieved from the Internet: URL:https://www.sicame.co.uk/pdf/section6/ 6.01-6.02.pdf [retrieved on 2018-10-23]
- Filoform: "Filoform Duct Seals 2017", , 31 May 2017 (2017-05-31), XP055518708, United States ISBN: 978-0-12-437162-0 Retrieved from the Internet: URL:https://www.powerandcables.com/wp-cont ent/uploads/2017/05/Filoform-Duct-Seals.pd f [retrieved on 2018-10-24]
- Prysmian Group: "Low Voltage 4Way Underground Pre-Cast Link Disconnecting Box", , 31 May 2017 (2017-05-31), XP055518819, Retrieved from the Internet: URL:https://www.biconcomponents.co.uk/924P C.pdf [retrieved on 2018-10-25]

## Description

The invention relates to an underground link box for connecting and/or switching adjacent sections of at least two low-voltage cables, the underground link box comprising at least two end portions, each end portion is adapted to accomodate a cable, a center portion providing connection terminals for connecting and/or switching the sections of the cables accomodated in the end portions, wherein the center portion is located between the end portions, wherein at least one of the end portions is connected to the center portion by a joint portion. The underground link box further comprises a sealing member of a sealing agent, wherein the sealing agent is received in the joint portion.

The invention further relates to a method for sealing an underground link box against water ingress.

Underground link boxes are known in the art, and are used to isolate and redirect the underground low voltage supply network by fitting or removing isolating links or fuses. Underground link boxes of the art are, in general, filled with a hardening resin for sealing inner components of the link box.

Link boxes may fail for several reasons, e.g. due to ground/earth movement or damage during the re-instatement of the ground above them. Similarly, loads exerted on the underground link box beyond its specification, e.g. by a lorry parking on a pavement, may also damage the underground link box. A failing link box may ultimately cause an explosion under the pavement, representing a serious hazard to pedestrians walking over it.

Such underground link boxes are for instance shown in EP 1 681 748 A2 or technical resources as application guides or data sheets like, for instance Tyco Electronics Raychem Gmbh: *"Raychem Inline Joints",* July 31, 2003, Sicame Uk, "Link Boxes", June 30, 2017, or Prysmian Group, "Low Voltage 4Way Underground Pre-Cast Link Disconnecting Box", May 31, 2017. Further, the technical note of Filoform, "Filoform Duct Seals 2017", May 31, 2017, discloses low voltage tape joints designed to seal an open void in a cable duct.

An object of the present invention is therefore to provide an underground link box reducing this risk.

The underground link box according to the invention as defined in claim 1 solves the above problem in that the flexible joint portion is formed by a bellows-like structure, and in that the sealing agent remains flexible after being hardened.

The method according to the invention as defined in claim 9 solves the above problem by comprising the following steps: inserting at least two electric cables into end portions and a center portion of the underground link box, wherein at least one of the end portions is connected to the center portion by a joint portion; electrically connecting the cables with connection terminals of the center portion; and pouring a sealing agent into the underground link box for forming a sealing member, wherein the sealing agent is received in the joint portion, and wherein the flexible joint portion is formed by a bellows-like structure, and the sealing agent remains flexible after being hardened.

Such an inventive underground link box, as well as a link box fabricated by the inventive method, therefore provide a flexible seal which may, on the one hand, prevent cracking of the underground link box due to the sealing agent's flexibility and, on the other hand, seal an area of the underground link box in which a crack occurred, thereby preventing water ingress. The underground link box is further better suited to adapt to a shifting ground or other mechanical changes in its environment.

The flexible seal therefore reduces the risk of failure proneness.

Furthermore, the flexible seal has the advantage that it may be applied in the same way as a sealing resin in state-of-the-art underground link boxes. The flexible sealing resin may also be poured into the underground link box in a liquid state.

The joint portion has the advantage that the flexible sealing agent may be protected from environmental influences, such as mechanical stress, by such a joint portion. Furthermore, the joint portion allows flexure of the end portions.

The process of sealing an underground link box according to the invention is not altered compared to the prior art, such that no additional effort is needed to train personnel in charge of installing the underground link box. As the process steps for installing the underground link box are not modified, the error rate during the installation of underground link boxes will not increase due to the application of the flexible sealing agent.

Hardening of a resin or, more generally, a material poured into the underground link box is a process well known in the art. During hardening, a liquid material modifies the chemical structure of its components, exemplarily by cross-linking, and forms a solid material.

Solutions of the art apply e.g. resins poured into the underground link box in a liquid state, thus at least partially enclosing inner components like electrically conductive members, which liquid resins subsequently harden, i.e. enter the solid state. As hardening of a resin is irreversible, the process step of pouring the sealing agent into the underground link box is performed only after all electrical connections have been established.

The underground link box may provide connection means for more than two low-voltage cables. Prominent examples of underground link boxes are so-called two-way or four-way link boxes, whereby the two-way link box connects two cables and the four-way link box connects two sets of cables with each other, i.e. a first cable with a third cable and a second cable with a fourth cable.

For the purposes of this invention, the term 'low voltage' typically refers to a voltage lower than 1 kV.

The inventive underground link box as well as the inventive method may be improved by further embodiments, each of which is advantageous on its own. Technical features of the different embodiments may be arbitrarily combined or omitted if the technical effect resulting from the omitted technical feature is not relevant to the present invention.

In one embodiment of the inventive underground link box, at least one of the end portions and the center portion may be at least partially filled with the flexible sealing agent. The flexible sealing agent may allow for flexure of the end portions relative to the center portion and prevent cracking and/or for providing a flexible seal.

In the solutions of the art, the installer must prepare a large foundation pad for the link box to keep it rigid after installation. This pad must hold the center portion and the end portions. Providing the sealing member made of the flexible sealing agent allows the at least two cables to flex in all directions, negating the need for large foundation pads. Ground movement may be absorbed by these end portions filled with the flexible sealing agent without cracking the end portions filled with the flexible sealing agent.

Installation of such an underground link box thus requires less preparation for the foundation and may consequently be performed faster and incur fewer costs without increasing failure proneness. This embodiment of the inventive underground link box consequently minimizes the chances of underground link box failure due to poor installation or ground movement.

If the center portion is at least partially filled with the flexible sealing agent moisture may be prevented from entering the center portion of the underground link box as the flexible seal may stretch and move without cracking (due to its flexibility), which ensures that the center portion provided with the flexible sealing agent remains moisture-proof. The center portion even may remain moisture-proof if the link box main body cracks through damage resulting from ground movement.

Such a flexible sealing agent in the center portion of the underground link box is therefore a passive means of preventing failure of the link box. This embodiment of the inventive underground link box also minimizes the chances of a link box failing due to poor installation or ground movement.

In an according inventive method, the sealing agent may be poured into at least one of the end portions and/or into the center portion.

It is particularly advantageous if a terminal cover is comprised which is configured to being arranged within the center portion and to surround and/or cover the connection terminals, wherein the sealing agent may at least partially extend around the perimeter of the terminal cover at the junction where the terminal cover abuts the center portion, wherein the sealing agent may flexibly seal the terminal cover from liquids.

The terminal cover is to be understood as a member, e.g. a wall, surrounding the electrical terminal. The terminal cover is placed upon the electrical contacts or connection terminals and rests on a base of the underground link box. The flexible sealing agent may thus seal the region of the terminal cover abutting the base of the link box. In particular, the area which is surrounded by the terminal cover is also filled with the flexible sealing agent, which may at least partially embed the connection terminals. Thus, the lower portion of the underground link box, i.e. the region between the terminal cover and the base of the link box, is sealed by the flexible sealing agent against water ingress into the interior of the terminal cover, thus preventing moisture from reaching the connection terminals.

In a further embodiment of the inventive underground link box, the hardened and flexible sealing agent adheres to the central portion and the terminal cover. Such adhesion may prevent water ingress due to cracks in the terminal cover and/or the base of the underground link box, i.e. the center portion.

As the hardened and flexible sealing agent adheres to the central portion and to the terminal cover, the region in which the central portion and the terminal cover abut each other, in particular a possible gap between both elements prior to pouring in the sealing agent is sealed such that no liquids may pass. Additionally, regions of the central portion and/or the terminal cover which are partially covered by the flexible sealing agent are still protected from water ingress, even if cracks in one or both of the elements occur.

The joint portions may be a single member or may be formed by an upper joint shell and a lower joint shell, both joint shells may be flexible. If the underground link box is installed, the upper and lower joint shell may be attached to each other forming a recess for receiving the (not yet hardened) flexible sealing agent. The flexible sealing agent thus provides flexibility of the end portions, wherein the joint portion may provide stability and mechanical protection.

The flexible joint portion may be at least partially circular. Each of the joint portions may comprise bellows-like structures which, when mounted, form a perimeter, in particular a circular perimeter which allows the joint portion to flex in all directions when a force is exerted onto the end portions. Thus, the joint portion may also flex together with the flexible sealing agent.

Furthermore, a pouring hole may be provided for pouring the sealing agent into the end portions. The end portions of the inventive underground link box may be flexible with respect to the center portion up to an angle of approximately 15°.

In another embodiment of the inventive underground link box at least one of the end portions comprises a separate end sleeve which is jointed to the center portion. The end sleeve may be a single member or may be formed by an upper and a lower sleeve shell. The end sleeve protects the end portions from mechanical influences.

In yet another embodiment, preferably the separate end sleeve may be jointed to the center portion by the joint portion. Thus, the end portion may be attached to the center portion by means of the joint portion. Both, the end sleeve and the joint portion may each comprise a single member or may be formed by two shells.

The end sleeve may be rigid and in particular be more rigid than the joint portion.

In another embodiment of the inventive underground link box, the sealing agent may extend from the end portions at least partially into the center portion. The sealing agent providing the seal in the center portion of the underground link box may therefore be a monolithic sealing member extending from the center portion into the end portions or from the end portions into the center portion.

In the according method, the (not yet hardened) sealing agent may thus flow from the center portion to the end portions or from the end portions to the center portion when it is poured into the underground link box for forming the sealing member. Hence, the underground link box may provide corresponding flow openings or flow channel through which the liquid sealing agent may flow from the center portion to the end portions or from the end portions to the center portion.

An improved embodiment of the inventive method may comprise the further process step of covering a pouring hole through which the sealing agent is provided with a cover member.

Furthermore, the process step of covering at least the terminal cover with a cover assembly may be comprised in the inventive method. The cover assembly may be a cast-iron diving bell lid at least partially receiving the terminal cover. In a different embodiment, the cover assembly may be a vacuum formed plastic diving bell lid which is positioned and fixed within the underground link box by a locking bar which may touch a top of the diving bell lid.

The flexible resin may in particular comprise polyurethane which is a polymer composed of organic units and does not melt when heated, and is available with a multitude of different chemical and physical properties, e.g. elasticity, depending solely on the raw materials used for its fabrication.

In the following, the inventive underground link box and the inventive method will be described by way of example referring to the accompanying figures. The figures show different exemplary embodiments of the present invention which do not limit the scope of protection which is defined by the claims. In the figures, identical technical features, as well as technical features having the same technical effect, are referred to using the same reference numerals. Technical features of the different embodiments shown may be arbitrarily combined with each other or even omitted if the technical effect obtained by the omitted technical feature is not relevant to the present invention.

The figures show:
- Fig. 1: an exploded view of an underground link box of the art;
- Fig. 2: an installed underground link box of the art;
- Fig. 3: possible problems of state-of-the-art underground link boxes;
- Fig. 4: a first embodiment of the inventive underground link box;
- Fig. 5: a detail of the underground link box of Fig. 4 in a pre-assembled state; and
- Fig. 6: a second embodiment of the inventive underground link box.

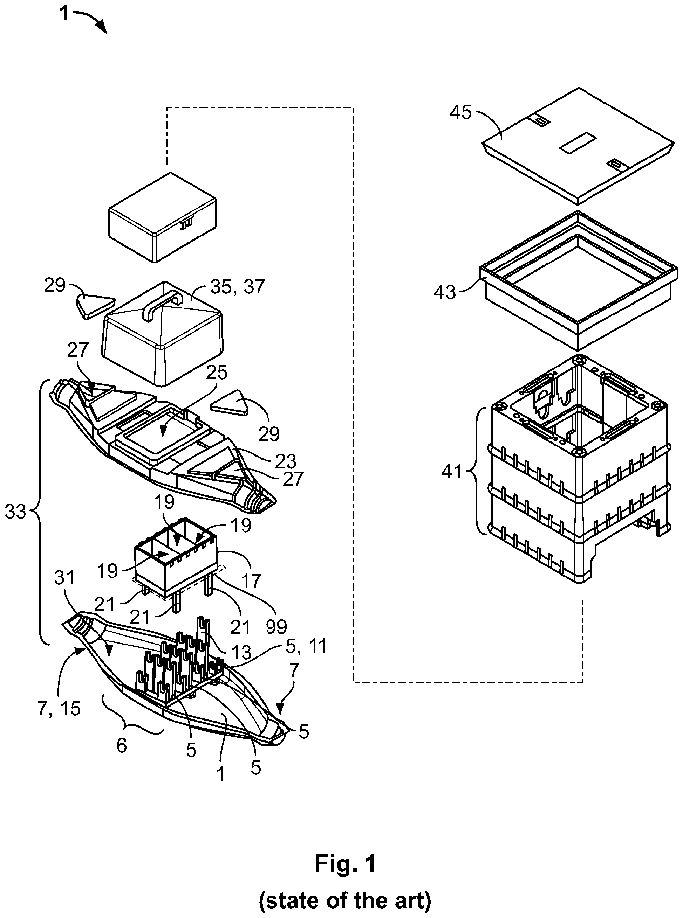

In Fig. 1, an underground link box 1 is shown in an exploded view. The underground link box 1 comprises a base 3 to which four connection terminals 5, or connectors 5 for short, are attached in a center portion 6. The connectors 5 are adapted to receive an unshielded cable core (not shown) from either side of the underground link box 1, in particular from either of the end portions 7.

The embodiment of the underground link box 1 shown in Fig. 1 is a two-way underground link box 1a, whereas the four-way underground link box (not shown) is merely larger and comprises more connectors 5 and consequently a larger center portion 6.

Each of the connectors 5 comprises two link posts 9, except for the ground or earth connector 11, which comprises a single ground link post 13.

The base 3 is formed as a lower shell 15, which at least partially receives the connectors 5 and, after installation, also partially receives the cables.

A terminal cover 17 having three compartments 19 may be snap fit to the base 3 by means of locking members 21. The underground link box shown is applied for threephase alternating current, wherein each compartment 19 receives a conductor for one phase.

Each compartment receives one connector 5, whereas the ground connector 11 and the corresponding ground link post 13 remain outside of the terminal cover 17 when installed. The terminal cover 17 is installed in the center portion 6.

The underground link box 1 further comprises an upper shell 23 comprising a terminal opening 25 through which the terminal cover 17 extends and the link posts 9 are accessible. The upper shell 23 further comprises pouring openings or pouring holes 27 through which a resin (not shown) may be poured into the underground link box 1.

After pouring, the pouring holes 27 may be covered by cover members 29.

During installation of the underground link box 1, the lower shell 15 and the upper shell 23 are assembled, whereby further securing means (not shown) for securing the close abutment of both shells 15, 23 may be comprised. The resin is subsequently poured through the pouring holes 27 and at least partially fill an inner volume 31 which is formed by the lower shell 15 and the upper shell 23. The resin applied in the art hardens and changes its state to a hard, inflexible filler material sealing the connectors 5.

The underground link box 1 comprises a cover assembly 34 embodied as a diving bell lid 35. The diving bell lid 35, which is an cast-iron diving bell lid 37 in the embodiment shown in Fig. 1, is installed on a link box body 33 formed by the lower shell 15 and the upper shell 23.

The underground link box 1 furthermore comprises an accessory toolbox assembly 39.

The installed underground link box 1 comprises a link box enclosure set 41, a link box enclosure cover 43 and a top surface of the footpath/roadway 45. The top surface of the footpath/roadway 45 is level with the footpath or the roadway when the underground link box 1 is installed. As the link box enclosure set 41 comprises three segments 47, different heights of the link box enclosure set 41 and, ultimately, different depths of installation of the underground link box 1 may be obtained.

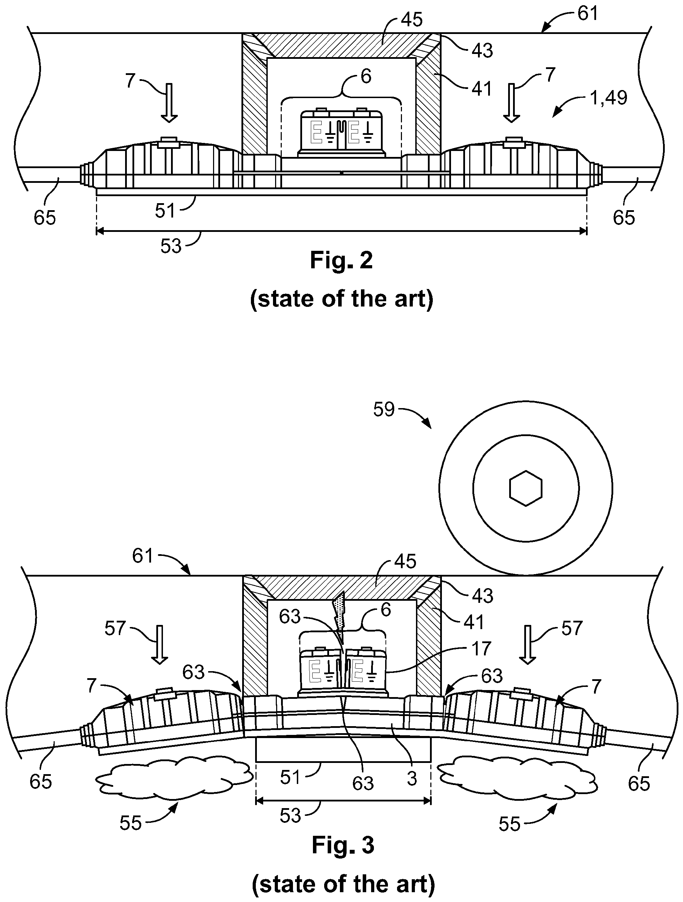

Fig. 2 shows a partially cut side view of a state-of-the-art underground link box 1 in an installed state 49.

The underground link box 1 requires a foundation 51 extending over a length 53 encompassing the center portion 6 and the two end portions 7.

The problems that may occur if the foundation 51 has an insufficient length 53 are indicated in Fig. 3.

If the ground 55, indicated by a cloud-shaped section below the end portions 7 is used to fill the hole needed to install the underground link box 1, and if the foundation 51 does not encompass the end portions 7, a bending force 57 may act upon one or both of the end portions 7.

Said bending force 57 may result either from the re-instatement of the ground 55 - i.e. refilling the hole with earth - or from exceptional loads indicated in Fig. 3 by a wheel of a lorry/truck 59 which may park on a footpath 61 and which may exert such a bending force 57.

Such a bending force 57 may rotatably deflect the end portions 7 with respect to the center portion 6.

The hardened sealing agent of the art and/or the terminal cover 17 yield a limited resistance to bending, such that cracks 63 occur in the terminal cover 17 and/or in the base 3 and/or between the center portion 6 and the end portions 7.

These cracks 63 may result in water ingress and potentially to a short circuit between the phases of the alternating current transmitted via cables 65. Such water ingress may result in an explosion which represents a high security risk for pedestrians walking over the underground link box 1.

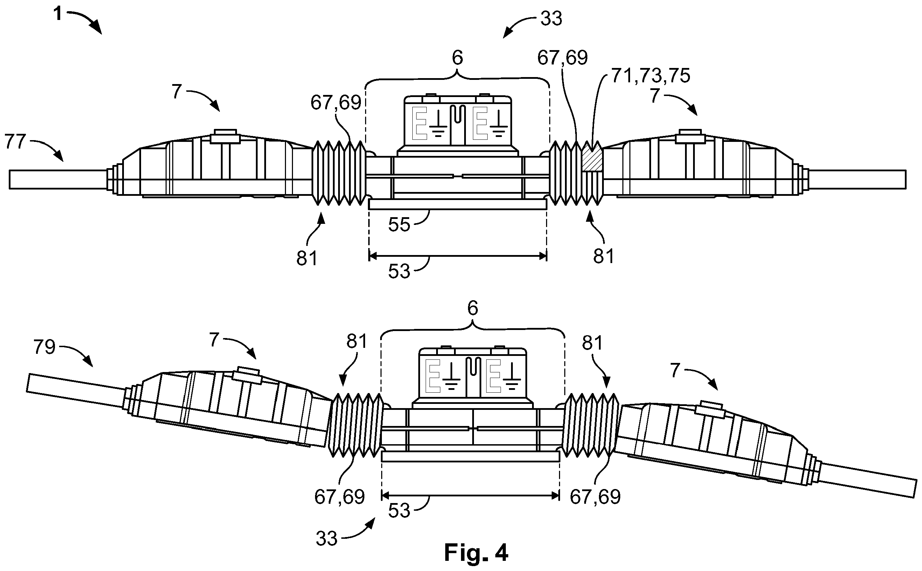

A first embodiment of the inventive underground link box 1 is shown in Fig. 4. In the figure, only the link box body 33 is shown. The foundation 51 has a length 53 such that the foundation 51 only covers the center portion 6 of the underground link box 1.

The foundation 51 therefore does not extend alongside the end portions 7.

The inventive underground link box 1 comprises a joint portion 68, which is flexible. The joint portion 68 is embodied as a bellow-like structure 69 in the embodiment shown in Fig. 4, between the center portion 6 and the corresponding end portion 7.

The end portions 7 furthermore comprise end sleeves 70 which are jointed to the center portion 6 by the joint portions 68.

The end portion 7 and/or the joint portion 68 comprise a sealing member 71 of a sealing agent 73. The sealing agent 73 is, in particular, a flexible sealing agent 75, wherein the flexibility of the flexible sealing agent refers to its state after being hardened.

In the figure, an even state 77 and a distorted state 79 of the underground link box 1 is shown. In the distorted state 79, the flexible sealing agent 75 and the bellows-like structure 69 allow for bending or flexing of the end portions 7 in any direction around a mechanical connection portion 81.

Flexing of the end portions 7 with respect to the center portion 6 is therefore possible without incurring any damage to the underground link box 1.

The inventive underground link box 1 may therefore handle the situation depicted in Fig. 3 without any crack 63 forming in the terminal cover 17 and/or the end portions 7.

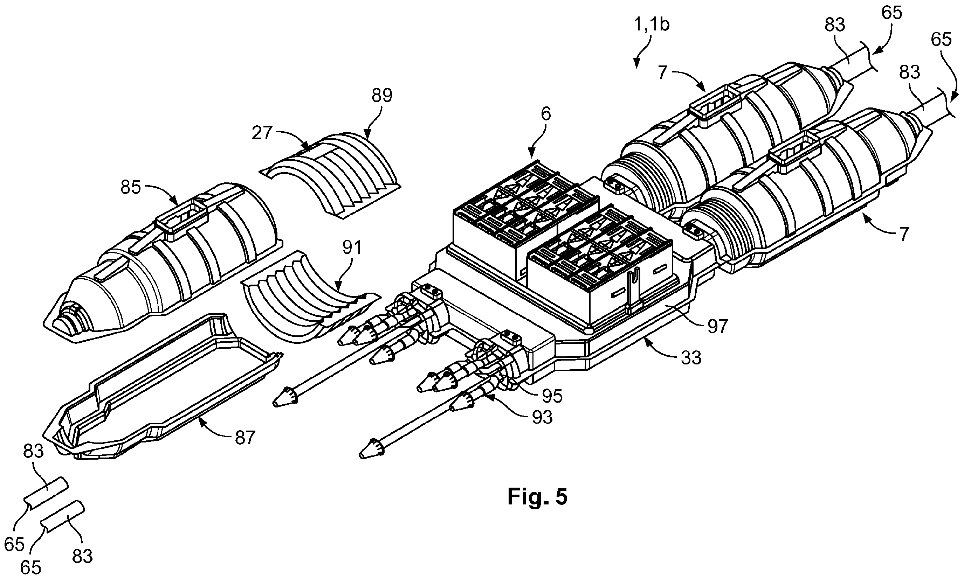

Fig.5 shows details of the underground link box 1 of Fig. 4 in a partially exploded view. The link box 1 shown is a four-way underground link box 1b used to connect and/or switch adjacent sections 83 of four cables 65.

The four-way underground link box 1b comprises four end portions 7, whereby only one end portion 7 is shown on the left side of the underground link box 1 in the exploded view.

At least one end portion 7, more precisely an end sleeve 70 of such, comprises an upper sleeve shell 85 and a lower sleeve shell 87, as well as an upper flexible joint shell 89 and a lower flexible joint shell 91. The pouring hole 27 is provided in the upper flexible joint shell 89.

In order to allow for flexibility of the end portions 7 as shown in Fig. 4, the underground link box 1 comprises flexible cable tails 93 which are completely received within the flexible sealing agent 75 when the underground link box 1 is installed.

The link box body 33 is shown without a diving bell lid 35, as well as without further components for the installation of the underground link box 1.

The link box body 33 may comprise passages 95 which connect the volume surrounded by the upper flexible joint shell 89 and the lower flexible joint shell 91, as well as by the upper sleeve shell 85 and the lower sleeve shell 87 with a hollow volume 97 of the link box body 33 (see Fig. 1).

Said hollow volume 97 may comprise a perimeter 99 of the terminal cover 17 (indicated by a dashed line in Fig. 1 as it is not visible in Fig. 5).

If the liquid flexible sealing agent 75 is poured into the underground link box 1 through the pouring holes 27, it may also enter the center portion 6 of the underground link box 1 through the passages 95.

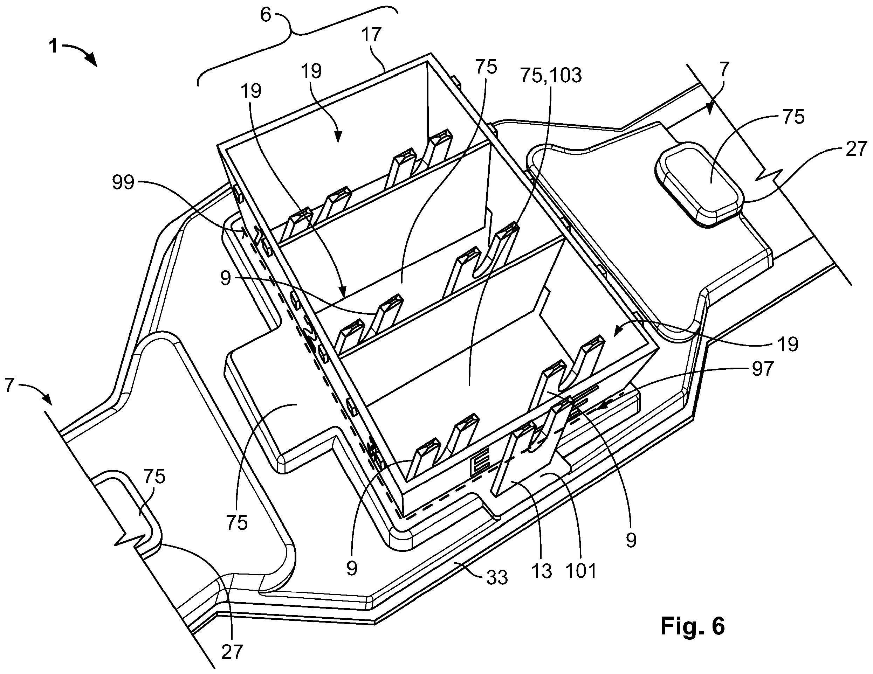

In Fig. 6, a portion of the underground link box 1 comprising such a flexible seal 101 in the center portion 6 is shown.

In the embodiment shown, the flexible sealing agent 75 has completely filled the end portions 7 (which are only partially shown) up to the pouring holes 27 as well as the hollow volume 97 of the link box body 33.

The flexible sealing agent 35 abuts the terminal cover 17 along its entire lower perimeter 99, i.e. the junction where the terminal cover 17 abuts the base 3 of the underground link box 1. The perimeter 99 is indicated by a dashed line. Furthermore, the flexible sealing agent 75 also seals the three compartments 19 and entirely covers the connectors 5, such that only the ends of the link posts 9, 13 extend from the flexible sealing agent 75.

The flexible sealing agent 75 additionally adheres to the terminal cover 17, such that even if the bond between the flexible sealing agent 75 and the internal components is broken, the terminal cover 17 remains sealed to all upper surfaces and thus prevents moisture ingress.

The flexible sealing agent 75 may in particular comprise polyurethane 103.

The flexible sealing agent 75 may extend from the center portion 6 to the end portions 7 or from the end portions 7 to the center portion 6.

### REFERENCE NUMERALS

- 1: underground link box
- 1a: two-way underground link box
- 1b: four-way underground link box
- 3: base
- 5: connection terminals
- 6: center portion
- 7: end portion
- 9: link post
- 11: ground connector
- 13: ground link post
- 15: lower shell
- 17: terminal cover
- 19: compartment
- 21: locking member
- 23: upper shell
- 25: terminal opening
- 27: pouring hole
- 29: cover member
- 31: inner volume
- 33: link box body
- 34: cover assembly
- 35: diving bell lid
- 37: cast-iron diving bell lid
- 39: accessory toolbox assembly
- 41: link box enclosure set
- 43: link box enclosure cover
- 45: top surface of footpath/roadway
- 47: segment
- 49: installed state
- 51: foundation
- 53: length
- 55: ground/earth
- 57: bending force
- 59: wheel of a lorry/truck
- 61: footpath
- 63: crack
- 65: cable
- 68: joint portion
- 69: bellows-like structure
- 70: end sleeve
- 71: sealing member
- 73: sealing agent
- 75: flexible sealing agent
- 77: even state
- 79: distorted state
- 81: mechanical connection portion
- 83: section
- 85: upper sleeve shell
- 87: lower sleeve shell
- 89: upper flexible joint shell
- 91: lower flexible joint shell
- 93: flexible cable tails
- 95: passage
- 97: hollow volume
- 99: perimeter
- 101: flexible seal
- 103: polyurethane

## Claims

1. Underground link box (1) for connecting and/or switching adjacent sections (83) of at least two low-voltage cables (65), the underground link box (1) comprising
- at least two end portions (7), each end portion (7) is adapted to accommodate a cable (65);
- a center portion (6) providing connection terminals (5) for connecting and/or switching the sections (83) of the cables (65) accomodated in the end portions (7), wherein the center portion (6) is located between the end portions (7); and
- a sealing member (71) of a sealing agent (73), **characterized in that** at least one of the end portions (7) is connected to the center portion (6) by a joint portion (68); and **in that** the sealing agent (73) is received in the joint portion (68); and **in that** the joint portion (68) is formed by a bellow-like structure (69), and **in that** the sealing agent (73) remains flexible after being hardened.

2. Underground link box (1) according to claim 1, **characterized in that** at least one of the end portions (7) and the center portion (6) is at least partially filled with the flexible sealing agent (75).

3. Underground link box (1) according to claim 1 or 2, **characterized in that** a terminal cover (17) configured to being arranged within the center portion (6) and to surround and/or cover the connection terminals (5) is comprised, and **in that** the sealing agent (75) at least partially extends around the perimeter (99) of the terminal cover (17) at the junction where the terminal cover (17) abuts the center portion (6) and flexibly seals the terminal cover (17) from liquids.

4. Underground link box (1) according to claim 3, **characterized in that** the hardened and flexible sealing agent (75) adheres to the central portion (6) and the terminal cover (17).

5. Underground link box (1) according to any one of claims 1 to 4, **characterized in that** at least one of the end portions (7) comprises a separate end sleeve (70) which is jointed to the center portion (6).

6. Underground link box (1) according to claim 5, **characterized in that** the separate end sleeve (70) is jointed to the center portion (6) by the joint portion (68).

7. Underground link box (1) according to any one of claims 1 to 6, **characterized in that** the sealing agent (75) extends from the end portions (7) at least partially into the center portion (6).

8. Underground link box (1) according to any one of claims 1 to 7, **characterized in that** the sealing agent (75) comprises polyurethane (103).

9. Method for sealing an underground link box (1) against water ingress, the method comprising the following steps:
- inserting at least two electric cables (65) into end portions (7) and a center portion (6) of the underground link box (1), wherein at least one of the end portions (7) is connected to the center portion (6) by a joint portion (68);
- electrically connecting the cables (65) with connection terminals (5) of the center portion (6); and
- pouring a sealing agent (75) into the underground link box (1) for forming a sealing member (71), wherein the sealing agent (75) is received in the joint portion (68),
**characterized in that** the joint portion (68) is formed by a bellow-like structure (69), and **in that** the sealing agent (75) remains flexible after being hardened.

10. Method according to claim 9, wherein the sealing agent (75) is poured into at least one of the end portions (7) and/or into the center portion (6).

11. Method according to claim 9 or 10, further comprising the process step of covering a pouring hole (27) through which the sealing agent (75) is provided with a cover member (29).

12. Method according to any one of claims 9 to 11, further comprising the process step of covering at least the terminal cover (17) with a cover assembly (34).

## Patentansprüche

1. Unterirdischer Verteilerkasten (1) zum Verbinden und/oder Schalten benachbarter Teilabschnitte (83) wenigstens zweier Niederspannungskabel (65), wobei der unterirdische Verteilerkasten (1) umfasst:
wenigstens zwei Endabschnitte (7), wobei jeder Endabschnitt (7) zum Aufnehmen eines Kabels (65) eingerichtet ist;
einen Mittelabschnitt (6), der Verbindungsanschlüsse (5) zum Verbinden und/oder Schalten der Teilabschnitte (83) der in den Endabschnitten (7) aufgenommenen Kabel (65) aufweist, wobei sich der Mittelabschnitt (6) zwischen den Endabschnitten (7) befindet; und
ein Dichtungselement (71) aus einem Dichtungsmittel (73),
**dadurch gekennzeichnet, dass**
wenigstens einer der Endabschnitte (7) mit dem Mittelabschnitt (6) über einen Verbinderabschnitt (68) verbunden ist;
dadurch, dass das Dichtungsmittel (73) in dem Verbinderabschnitt (68) aufgenommen ist;
dadurch, dass der Verbinderabschnitt (68) durch eine balgartige Struktur (69) gebildet wird, und
dadurch, dass das Dichtungsmittel (73) nach Aushärten flexibel bleibt.

2. Unterirdischer Verteilerkasten (1) nach Anspruch 1, **dadurch gekennzeichnet, dass** die Endabschnitte (7) oder/und der Mittelabschnitt (6) wenigstens teilweise mit dem flexiblen Dichtungsmittel (75) gefüllt sind.

3. Unterirdischer Verteilerkasten (1) nach Anspruch 1 oder 2, **dadurch gekennzeichnet, dass**
eine Anschluss-Abdeckung (17) enthalten ist, die so ausgeführt ist, dass sie innerhalb des Mittelabschnitts (6) angeordnet ist und die Verbindungsanschlüsse (5) umgibt und/oder abdeckt, und
dadurch, dass sich das Dichtungsmittel (75) an der Verbindungsstelle, an der die Anschluss-Abdeckung (17) an dem Mittelteil (6) anliegt, wenigstens teilweise um den Umfang (99) der Anschluss-Abdeckung (17) herum erstreckt, und es die Anschluss-Abdeckung (17) flexibel gegen Flüssigkeiten abdichtet.

4. Unterirdischer Verteilerkasten (1) nach Anspruch 3, **dadurch gekennzeichnet, dass** das ausgehärtete und flexible Dichtungsmittel (75) an dem Mittelabschnitt (6) und der Anschluss-Abdeckung (17) haftet.

5. Unterirdischer Verteilerkasten (1) nach einem der Ansprüche 1 bis 4, **dadurch gekennzeichnet, dass**
wenigstens einer der Endabschnitte (7) einen separaten Endverschluss (70) umfasst, der mit dem Mittelabschnitt (6) verbunden ist.

6. Unterirdischer Verteilerkasten (1) nach Anspruch 5, **dadurch gekennzeichnet, dass** der separate Endverschluss (70) über den Verbinderabschnitt (68) mit dem Mittelabschnitt (6) verbunden ist.

7. Unterirdischer Verteilerkasten (1) nach einem der Ansprüche 1 bis 6, **dadurch gekennzeichnet, dass**
sich das Dichtungsmittel (75) von den Endabschnitten (7) aus wenigstens teilweise in den Mittelabschnitt (6) hinein erstreckt.

8. Unterirdischer Verteilerkasten (1) nach einem der Ansprüche 1 bis 7, **dadurch gekennzeichnet, dass**
das Dichtungsmittel (75) Polyurethan (103) umfasst.

9. Verfahren zum Abdichten eines unterirdischen Verteilerkastens (1) gegen Eindringen von Wasser, wobei das Verfahren die folgenden Schritte umfasst:
Einführen wenigstens zweier elektrischer Kabel (65) in Endabschnitte (7) und einen Mittelabschnitt (6) des unterirdischen Verteilerkastens (1), wobei wenigstens einer der Endabschnitte (7) über einen Verbinderabschnitt (68) mit dem Mittelabschnitt (6) verbunden ist;
elektrisches Verbinden der Kabel (65) mit Verbindungsanschlüssen (5) des Mittelabschnitts (6); und
Einfüllen eines Dichtungsmittels (75) in den unterirdischen Verteilerkasten (1) zum Ausbilden eines Dichtungselementes (71), wobei das Dichtungsmittel (75) in dem Verbinderabschnitt (68) aufgenommen wird,
**dadurch gekennzeichnet, dass**
der Verbinderabschnitt (68) durch eine balgartige Struktur (69) gebildet wird, und dadurch, dass das Dichtungsmittel (75) nach Aushärten flexibel bleibt.

10. Verfahren nach Anspruch 9, wobei das Dichtungsmittel (75) in wenigstens einen der Endabschnitte (7) und/oder in den Mittelabschnitt (6) eingefüllt wird.

11. Verfahren nach Anspruch 9 oder 10, das des Weiteren den Verfahrensschritt des Abdeckens einer Einfüllöffnung (27), über die das Dichtungsmittel (75) eingebracht wird, mit einem Abdeckelement (29) umfasst.

12. Verfahren nach einem der Ansprüche 9 bis 11, das des Weiteren den Verfahrensschritt des Abdeckens wenigstens der Anschluss-Abdeckung (17) mit einer Abdeck-Anordnung (34) umfasst.

## Revendications

1. Boîte de liaison souterraine (1) pour connecter et/ou commuter des sections adjacentes (83) d'au moins deux câbles basse tension (65), la boîte de liaison souterraine (1) comprenant:
- au moins deux parties d'extrémité (7), chaque partie d'extrémité (7) étant conçue pour recevoir un câble (65);
- une partie centrale (6) présentant des bornes de connexion (5) pour connecter et/ou commuter les sections (83) des câbles (65) logés dans les parties d'extrémité (7), dans laquelle la partie centrale (6) est située entre les parties d'extrémité (7); et
- un élément d'étanchéité (71) d'un agent d'étanchéité F (73), **caractérisé en ce qu'**au moins une des parties d'extrémité (7) est reliée à la partie centrale (6) par une partie de jonction (68); et **en ce que** l'agent d'étanchéité (73) est reçu dans la partie de jonction (68); et **en ce que** la partie de jonction (68) est formée par une structure en forme de soufflet (69), et **en ce que** l'agent d'étanchéité (73) reste flexible après avoir été durci.

2. Boîte de liaison souterraine (1) selon la revendication 1, **caractérisée en ce qu'au** moins une des parties d'extrémité (7) et la partie centrale (6) est au moins partiellement remplie de l'agent d'étanchéité flexible (75).

3. Boîte de liaison souterraine (1) selon les revendications 1 ou 2, **caractérisée en ce qu'**il est prévu un couvercle de bornes (17) configuré pour être agencé à l'intérieur de la partie centrale (6) et pour entourer et/ou couvrir les bornes de connexion (5), et **en ce que** l'agent d'étanchéité (75) s'étend au moins partiellement autour du périmètre (99) du couvercle de bornes (17) à la jonction où le couvercle de bornes (17) bute contre la partie centrale (6) et étanche de manière flexible le couvercle de bornes (17) aux liquides.

4. Boîte de liaison souterraine (1) selon la revendication 3, **caractérisée en ce que** l'agent d'étanchéité durci et flexible (75) adhère à la partie centrale (6) et au couvercle terminal (17).

5. Boîte de liaison souterraine (1) selon l'une quelconque des revendications 1 à 4, **caractérisée en ce qu'au** moins l'une des parties d'extrémité (7) comprend un manchon d'extrémité séparé (70) qui est articulé sur la partie centrale (6).

6. Boîte de liaison souterraine (1) selon la revendication 5, **caractérisée en ce que** le manchon d'extrémité séparé (70) est joint à la partie centrale (6) par la partie de jonction (68).

7. Boîte de liaison souterraine (1) selon l'une quelconque des revendications 1 à 6, **caractérisée en ce que** l'agent d'étanchéité (75) s'étend depuis les parties d'extrémité (7) au moins partiellement dans la partie centrale (6).

8. Boite de liaison souterraine (1) selon l'une quelconque des revendications 1 à 7, **caractérisée en ce que** l'agent d'étanchéité (75) comprend du polyuréthane (103).

9. Procédé pour rendre étanche une boîte de liaison souterraine (1) contre la pénétration d'eau, le procédé comprenant les étapes suivantes:
- insérer au moins deux câbles électriques (65) dans des parties d'extrémité (7) et une partie centrale (6) de la boîte de liaison souterraine (1), dans laquelle au moins une des parties d'extrémité (7) est connectée à la partie centrale (6) par une partie de jonction (68);
- connecter électriquement les câbles (65) aux bornes de connexion (5) de la partie centrale (6); et
- verser un agent d'étanchéité (75) dans la boîte de liaison souterraine (1) pour former un élément d'étanchéité (71), dans lequel l'agent d'étanchéité (75) est reçu dans la partie de jonction (68),
**caractérisé en ce que** la partie de jonction (68) est formée par une structure en forme de soufflet (69), et **en ce que** l'agent d'étanchéité (75) reste flexible après avoir été durci.

10. Procédé selon la revendication 9, dans lequel l'agent d'étanchéité (75) est versé dans au moins une des parties d'extrémité (7) et/ou dans la partie centrale (6).

11. Procédé selon les revendications 9 ou 10, comprenant en outre l'étape de traitement consistant à couvrir un trou de coulée (27) à travers lequel l'agent d'étanchéité (75) est fourni avec un élément de couverture (29).

12. Procédé selon l'une quelconque des revendications 9 à 11, comprenant en outre l'étape de traitement consistant à recouvrir au moins le couvercle de borne (17) avec un ensemble de couverture (34).
